# EUROPÄISCHE PATENTSCHRIFT

(11) **EP 0 779 192 B1**
(45) Veröffentlichungstag und Bekanntmachung des Hinweises auf die Patenterteilung: **23.02.2000**
(21) Anmeldenummer: 96119129.3
(22) Anmeldetag: 29.11.1996
(51) Int. Cl.: B60S 1/34

(54) **Wischanlage für Scheiben von Kraftfahrzeugen**
Windscreen wiper arrangement for motor vehicles
Dispositif d'essuie-glace pour des véhicules automobiles

(30) Priorität: 15.12.1995 DE 19546862; 15.05.1996 DE 19619593
(43) Veröffentlichungstag der Anmeldung: 18.06.1997
(73) Patentinhaber: ROBERT BOSCH GMBH, 70442 Stuttgart (DE)
(72) Erfinder: Geis, Andreas, 77815 Buehl (DE)

(56) Entgegenhaltungen:
- US-A- 3 599 270

## Beschreibung

### Stand der Technik

Die Erfindung geht aus von einer Wischanlage, wie sie im Anspruch 1 der EP-A-0 779 191, die dieselbe Priorität vom 15.12.95 genießt und am 29.10.96 veröffentlicht worden ist, bezeichnet ist. Es hat sich gezeigt, daß bei einer solchen Wischanlage die noch zulässigen Toleranzen zum einen bezüglich der Achsabstände zwischen den gestellfesten Lagerstellen des ersten Mehrgelenkgetriebes und zum anderen zwischen diesen Lagerstellen und den an den freien Enden der an diesen Lagerstellen geführten Getriebegliedteile befindlichen Gelenken sehr eng gehalten werden müssen, damit ein störungsfreier Wischbetrieb sichergestellt ist. Insbesondere wenn sich das Wischblatt in seiner Mittellage (Senkrechtstellung) befindet, können bei zu großen Toleranzen Stockungen während des Wischbetriebes auftreten. Die Einhaltung der nötigen engen Toleranzen ist jedoch aufwendig und somit teuer.

### Vorteile der Erfindung

Bei einer gattungsgemäßen Wischanlage mit den kennzeichnenden Merkmalen des Anspruchs 1 ist die Frage der noch zulässigen Toleranzen bei den oben erwähnten Achsabständen von untergeordneter Bedeutung, weil das geteilte Getriebeglied an seinen die beiden Getriebegliedteile verbindenden Verbindungsgelenk eine den Erfordernissen entsprechende Ausgleichsbewegung auszuführen vermag. Dazu ist die wirksame Länge des in Strecklage befindlichen, geteilten Getriebeglieds größer als die des entsprechenden Getriebeglieds bei der Wischanlage nach der EP-A-0 779 191.

Hinsichtlich der speziellen Funktionen der beiden gestellfest gelagerten Getriebeglieder ist es zweckmäßig, wenn das mit Abstand von dem zu den beiden Mehrgelenken gehörenden Getriebeglied am Wischerarm angelenkte Getriebeglied in seiner Längserstreckung geteilt ist.

Eine besonders betriebssichere Wischanlage ergibt sich dadurch, daß die von einem Antriebsaggregat auf das erste Mehrgelenkgetriebe wirkende Antriebskraft, dessen beide ortsfest gelagerten Getriebeglieder gleichmäßig beaufschlagt. Dies kann durch ein Hilfsgetriebe erreicht werden, welches beispielsweise als ungleichförmig übersetzendes Getriebe, wie zum Beispiel ein Kreuzlenker, als auch ein gleichförmig übersetzendes Getriebe, beispielsweise ein Zahnriemen- oder Zahnrädergetriebe, erreicht werden.

Eine besonders einfache Ausgestaltung des Hilfsgetriebes wird dadurch erreicht, daß die beiden ortsfest gelagerten Getriebeglieder des ersten Mehrgelenkgetriebes je als zweiarmige Hebel ausgebildet sind, deren eine Hebelarme die Getriebeglieder des ersten Mehrgelenkgetriebes bilden und deren andere Hebelarme über ein an diesen angelenktes, weiteres Getriebeglied miteinander gelenkig verbunden sind. Es ergibt sich somit neben dem ersten, die Form und Lage des Wischfelds beeinflussenden Mehrgelenkgetriebes und dem zweiten, die Stellung der Wischblattlängserstreckung bezüglich des Scheibenrandes steuernden Mehrgelenkgetriebes ein drittes Mehrgelenkgetriebe.

### Zeichnung

Weitere, vorteilhafte Weiterbildungen der Erfindung sind in der nachfolgenden Beschreibung eines Ausführungsbeispiels angegeben, das anhand einer einzigen, zur Zeichnung gehörenden Figur erläutert wird. Diese Figur zeigt eine Prinzipdarstellung einer Windschutzscheibe eines Kraftfahrzeuges von außen gesehen, der eine gemäß der Erfindung ausgebildete Wischanlage zugeordnet ist.

### Beschreibung des Ausführungsbeispiels

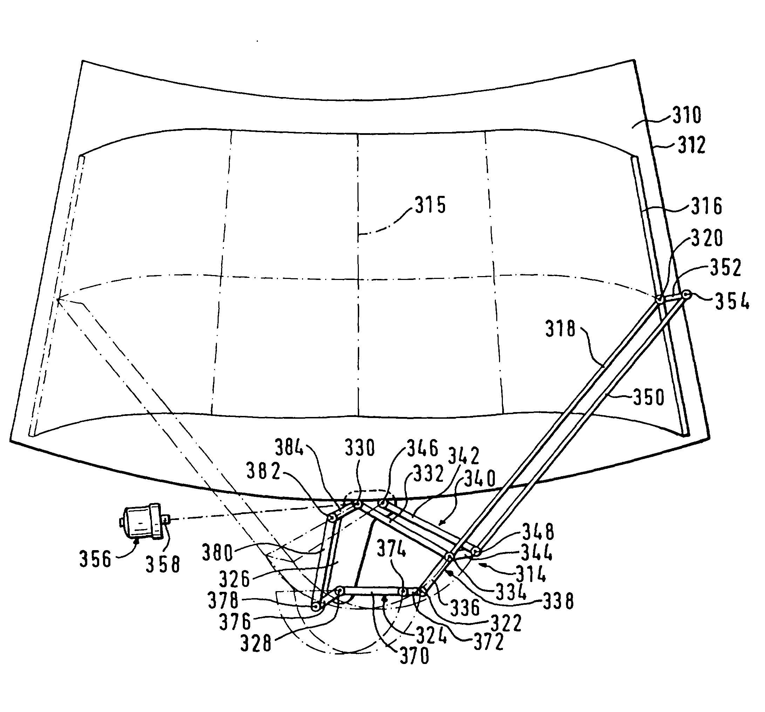

Dazu wird zunächst nachdrücklich auf die zur EP-A-0 779 191 gehörenden Anmeldungsunterlagen Bezug genommen, so daß die dort entnehmbare Offenbarung zur Offenbarung der vorliegenden Erfindung wird. Ausgehend vom Ausführungsbeispiel gemäß Figur 1 der Haupt-Patentanmeldung hat die erfindungsgemäße Wischanlage ebenfalls eine in der Zeichnung dargestellte Scheibenwischanlage 314, die einer Windschutzscheibe 310 mit einem Scheibenrand 312 eines nicht näher gezeigten Kraftfahrzeugs zugeordnet ist. Die Figur zeigt die Windschutzscheibe 310 in Frontansicht, das heißt, von außen mit Blickrichtung von vorne auf das Kraftfahrzeug. Das Wischblatt 316 ist also in seiner einen Umkehrstellung dargestellt, die sich auf der Seite des Fahrers des Kraftfahrzeugs befindet. Das langgestreckte Wischblatt 316 liegt somit in seiner Umkehrstellung nahe am Scheibenrand 312 und etwa parallel zu diesem. Es ist in seinem Mittelabschnitt gelenkig mit einem Ende eines angetriebenen Wischerarms 318 verbunden. Dieses Gelenk ist in der Zeichnung mit der Bezugszahl 320 versehen worden. Das andere Ende des Wischerarms 318 ist über ein Gelenk 322 mit einem Ende eines Armes 324 gelenkig verbunden, dessen anderes Ende in einem karosseriefesten Bauelement 326 pendelbar gelagert ist. Diese Lagerstelle ist in der Zeichnung mit dem Bezugszeichen 328 versehen worden. Das Bauelement 326 weist eine weitere Lagerstelle 330 für das eine Ende eines Schwinghebels 332 auf, dessen anderes, von der Lagerstelle 330 abgewandtes Ende gelenkig mit dem Wischerarm 318 verbunden ist. Dieses Gelenk ist in der Zeichnung mit der Bezugsziffer 334 versehen. Das Gelenk 334 befindet sich mit Abstand von dem Gelenk 322, zwischen den beiden Gelenken 320 und 322 des Wischerarms 318. Die wirksame Länge des Schwinghebels 332, welche durch den Abstand zwischen der Lagerstelle 330 und dem Gelenk 334 gegeben ist, ist größer als die wirksame Länge des Armes 324, die sich aus dem Abstand zwischen der Lagerstelle 328 und dem Gelenk 322 des Wischerarms 318 ergibt. Der Arm 324 bildet zusammen mit dem Schwinghebel 332 und dem zwischen dem Gelenk 322 und dem Gelenk 334 befindlichen Endabschnitt 336 des Wischerarms 318 ein Mehrgelenkgetriebe; hier ein sogenanntes Viergelenkgetriebe 338. Dieses Mehrgelenkgetriebe 338 treibt den Wischerarm 318 an und - beeinflußt je nach Abstimmung der wirksamen Längen seiner Getriebeglieder - die Form und Lage des Wischfeldes. Die Getriebeglieder des Viergelenkgetriebes 338 werden dabei durch den Arm 324, den Schwinghebel 332 und den Endabschnitt 336 gebildet. Der Schwinghebel 332 ist aber gleichzeitig auch ein Glied eines zweiten Mehrgelenkgetriebes, das hier ebenfalls als Viergelenkgetriebe 340 ausgelegt ist und zu dem ein Lenker 342 und ein Distanzarm 344 als weitere Getriebeglieder gehören. Das eine Ende des Lenkers 342 ist in einer Lagerstelle 346 des karosseriefesten Bauelements 326 pendelbar gelagert. Das andere, freie Ende des Lenkers 342 führt zu einem Gelenk 348, durch das der Lenker 342 mit einem Steuerarm 350 gelenkig verbunden ist. Der Distanzarm 344 ist mit dem Wischerarm 318 und dem Steuerarm 350 gelenkig verbunden. Die Verbindungen erfolgen in den Gelenken 334 und 348. Somit ist ersichtlich, daß zu dem zweiten Viergelenkgetriebe 340 neben dem Getriebeglied 332 auch zwei weitere Getriebeglieder gehören, welche durch den Lenker 342 und den Distanzarm 344 gebildet sind. Die wirksame Länge dieser Getriebeglieder wird beim Getriebeglied 342 durch den Abstand zwischen der Lagerstelle 346 und dem Gelenk 348 und beim Getriebeglied 344 durch den Abstand zwischen dem Gelenk 334 und dem Gelenk 348 gebildet. Die wirksamen Längen der Getriebeglieder 332 (Schwinghebel) und 342 (Lenker) sind beim Ausführungsbeispiel gleich groß, so daß - bezogen auf die Mittelposition 315 des Wischblatts 316 - sich ein symmetrisches Wischfeld ergibt. Das andere, von dem Gelenk 348 abgewandte Ende des Steuerarms 350 ist gelenkig mit einem Hebel 352 verbunden, der fest am Wischblatt 316 angeordnet und quer zur Wischblatt-Längserstreckung ausgerichtet ist. Die Gelenkverbindung zwischen dem Hebel 352 und dem Steuerarm 350 erfolgt in einem Gelenk 354. Um einen störungsfreien Betrieb der Wischanlage zu erreichen, sind die Gelenkachsen der Gelenke zwischen dem Getriebeglied 332 und dem Wischerarm 318 sowie dem Getriebeglied 332 und dem Distanzarm 344 miteinander fluchtend angeordnet. Dazu gehört auch, daß die Achsen der Gelenke 320 beziehungsweise 354 beziehungsweise 348 beziehungsweise 334 zwischen dem Wischerarm 318 und dem Wischblatt 316 beziehungsweise dem Steuerarm 350 und dem Wischblatt 316, 352 beziehungsweise dem Steuerarm 350, dem Lenker 342 und dem Distanzarm 344 beziehungsweise zwischen dem Distanzarm 344, dem Schwinghebel 332 und dem Wischerarm 318 auf der Oberfläche der Windschutzscheibe 310 stehen und zueinander parallel angeordnet sind. Dies gilt auch für das Gelenk 322 zwischen dem Wischerarm 318, 335 und dem Arm 324 sowie für die Achsen der karosseriefesten Lagerungen 328, 330, 346.

Die Wischanlage wird durch ein elektromotorisch betätigtes Antriebsaggregat 356 angetrieben, das eine pendelnde Abtriebswelle 48 aufweist, welches an der Lagerstelle 330 mit dem Schwinghebel 332 wirkverbunden ist, so daß die pendelnde Arbeitsbewegung des Wischblatts 316 vom Schwinghebel 332 ausgeht.

Um einen störungsfreien Wischbetrieb der Wischanlage sicherzustellen und zur Vermeidung der eingangs geschilderten, möglicherweise auftretenden Probleme ist das als Arm 324 bezeichnete Getriebeglied des ersten Viergelenkgetriebes 338 zweiteilig ausgeführt. Es besteht, wie aus der Figur ersichtlich, aus zwei Getriebegliedteilen 370 und 372, die an den einander zugewandten Enden über ein Gelenk 374 miteinander verbunden sind. Die kinematisch wirksame Länge des Arms 324 bestimmt sich somit durch den Abstand zwischen den beiden Gelenken 322 und 328. Zwar ist es - zum Erreichen desselben Vorteils - möglich, den Schwinghebel 332 zweiteilig auszuführen, doch könnten dann möglicherweise Antriebsprobleme auftreten, weil der Schwinghebel 332 zu zwei verschiedenen Viergelenkgetrieben 338 (Pendelbewegung) und 340 (Wischblattausrichtung) gehört. Weiter zeigt die Figur, daß der Arm 324 als zweiarmiger Hebel ausgebildet ist, das heißt, daß er eine fest mit ihm verbundene Verlängerung 376 hat, die sich über die gestellfeste Lagerstelle 328 hinaus erstreckt. An dem freien Ende der Verlängerung 376 ist an dieser in einem Gelenk 378 das eine Ende einer Schubstange 380 angelenkt, deren anderes Ende über ein Gelenk 382 mit einem Fortsatz 384 des Schwinghebels 332 gelenkig verbunden ist. Da der Fortsatz 384 ebenfalls fest mit dem Schwinghebel 332 verbunden ist, stellt sich dieser ebenfalls als zweiarmiger Hebel dar. Dabei bilden die Verlängerung 376 des Arms 324, der Fortsatz 384 des Schwinghebels 332 und die Schubstange 380 Glieder eines dritten Viergelenkgetriebes, dessen Gelenke durch die Lagerstellen 328 und 330 sowie die Gelenke 378 und 382 gebildet sind. Dieses dritte Viergelenkgetriebe sorgt dafür, daß die vom Antriebsaggregat 356 bereitgestellte Antriebskraft und die Antriebsbewegung auf die beiden ortsfest gelagerten Getriebeglieder 332 beziehungsweise 324 (gebildet durch die beiden Getriebegliedteile 370, 372) übertragen wird. Durch die zweiteilige Ausbildung des Arms 324, dessen beide Getriebegliedteile 370, 372 gelenkig miteinander verbunden sind, wird eine besonders montagefreundliche Form der Wischanlage erreicht, weil die Fertigungstoleranzen hinsichtlich der wirksamen Längen der einzelnen Getriebeglieder des ersten Viergelenkgetriebes 338 großzügig bemessen werden können. Stockungen oder Verklemmungen im ersten Viergelenkgetriebe 338 können durch entsprechende Ausgleichsbewegungen im Gelenk 374 des Arms 324 vermieden werden.

Die Wirkungsweise der erfindungsgemäßen Wischanlage entspricht völlig der Wischanlage gemäß der EP-A-0 779 191. Deshalb wird eine nochmalige Schilderung des Wischbetriebs nicht für erforderlich erachtet. Dies umso mehr, weil die in der vorliegenden Zusatz-Patentanmeldung verwendeten Bezugszahlen - nach Abzug der Zahl 300 - den bei der Hauptpatentanmeldung verwendeten Bezugszahlen entsprechen. Die zweiteilige Ausbildung des Arms 324 und die Anordnung des dritten Viergelenkgetriebes mit den Getriebegliedern 376, 380, 384 beeinflussen die Wirkungen der beiden Viergelenkgetriebe 338 und 340 in keiner Weise.

## Patentansprüche

1. Wischanlage für Scheiben von Kraftfahrzeugen, mit einem einzigen Wischerarm (318), der an seinem einen Ende über ein Pendellager (332, 334) pendelbar gelagert angetrieben und an dessen anderem, freien Ende ein an der zu wischenden Oberfläche der Scheibe (310) anlegbares, zwischen zwei Umkehrlagen quer zu seiner Längserstreckung hin- und her bewegbares Wischblatt (316) angelenkt ist, mit einem sich etwa parallel zum angetriebenen Wischerarm erstreckenden Steuerarm (350), dessen eines Ende pendelbar gelagert ist und dessen anderes Ende gelenkig mit dem Wischblatt (316, 352) verbunden ist, so daß er während des Wischbetriebs eine der Pendelbewegung des Wischerarms entsprechende Pendelbewegung ausführt, wobei der das Pendellager (332, 334) aufweisende Endabschnitt des Wischerarms (318) ein Getriebeglied (336) eines ersten Mehrgelenkgetriebes (338) bildet, an dem mit Abstand voneinander weitere, an ortsfesten Lagerstellen (328, 330) pendelbar gelagerte Getriebeglieder (324, 332) des Mehrgelenkgetriebes angelenkt sind und wobei eines (332) der weiteren Getriebeglieder (324 beziehungsweise 332) gleichzeitig ein Getriebeglied eines zweiten Mehrgelenkgetriebes (340) bildet, an dem der Steuerarm (350) angelenkt ist (nach Patentanmeldung 195 46 862.7), dadurch gekennzeichnet, daß eines der beiden am Endabschnitt (336) des Wischerarms (318) angelenkten, ortsfesten, langgestreckten Getriebeglieder (332 beziehungsweise 324) des ersten Mehrgelenkgetriebes (338) im Verlauf seiner Längserstreckung geteilt ist und daß die beiden Getriebegliedteile (370, 372) gelenkig miteinander verbunden sind.

2. Wischanlage nach Anspruch 1, dadurch gekennzeichnet, daß das mit Abstand von dem zu den beiden Mehrgelenkgetrieben (338, 340) gehörenden Getriebeglied (332) am Wischerarm (318, 336) angelenkte Getriebeglied (324) in seiner Längserstreckung geteilt ist.

3. Wischanlage nach Anspruch 2, dadurch gekennzeichnet, daß die von einem Antriebsaggregat (356) auf das erste Mehrgelenkgetriebe (338) wirkende Antriebskraft dessen beide ortsfest gelagerten Getriebeglieder (324, 332) gleichmäßig beaufschlagt.

4. Wischanlage nach Anspruch 3, dadurch gekennzeichnet, daß die beiden ortsfest gelagerten Getriebeglieder (332, 370) des ersten Mehrgelenkgetriebes (338), je als zweiarmige Hebel ausgebildet sind, deren eine Hebelarme die Getriebeglieder des ersten Mehrgelenkgetriebes bilden und deren andere Hebelarme (376, 384) über ein an diesen angelenktes, weiteres Getriebeglied (380) miteinander gelenkig verbunden sind.

## Claims

1. Wiping system for windscreens of motor vehicles, with a single wiper arm (318) which is driven at one end in a pendulously mounted manner via a pendulum bearing (332, 334) and on the other free end of which is articulated a wiping blade (316) which is capable of being laid on the surface of the windscreen (310) to be wiped and which is movable to and fro transversely to its longitudinal extent between two reversal positions, and with a control arm (350) which extends approximately parallel to the driven wiper arm and one end of which is pendulously mounted and the other end of which is connected in an articulated manner to the wiping blade (316, 352), so that, during wiping operation, the said control arm executes a pendulum movement corresponding to the pendulum movement of the wiper arm, that end portion of the wiper arm (318) which has the pendulum bearing (332, 334) forming a mechanism element (336) of a first multi-jointed mechanism (338), on which are articulated at a distance from one another further mechanism elements (324, 332) of the multi-jointed mechanism which are pendulously mounted at fixed bearing points (328, 330), and one (332) of the further mechanism elements (324 or 332) at the same time forming a mechanism element of a second multi-jointed mechanism (340), on which the control arm (350) is articulated (according to Patent Application 195 46 862.7), characterized in that one of the two fixed elongate mechanism elements (332 or 324) of the first multi-jointed mechanism (338) which are articulated on the end portion (336) of the wiper arm (318) is divided along its longitudinal extent, and in that the two mechanism element parts (370, 372) are connected to one another in an articulated manner.

2. Wiping system according to Claim 1, characterized in that the mechanism element (324) articulated on the wiper arm (318, 336) at a distance from the mechanism element (332) belonging to the two multi-jointed mechanisms (338, 340) is divided along its longitudinal extent.

3. Wiping system according to Claim 2, characterized in that the driving force exerted by a drive unit (356) on the first multi-jointed mechanism (338) loads uniformly the two fixedly mounted mechanism elements (324, 332) of the latter.

4. Wiping system according to Claim 3, characterized in that the two fixedly mounted mechanism elements (332, 370) of the first multi-jointed mechanism (338) are designed in each case as two-armed levers, the one lever arms of which form the mechanism elements of the first multi-jointed mechanism and the other lever arms (376, 384) of which are connected to one another in an articulated manner via a further mechanism element (380) articulated on the said mechanism elements.

## Revendications

1. Dispositif d'essuie-glace pour des glaces de véhicules à moteur, comprenant un bras d'essuie-glace (318) unique qui est entraîné à l'une de ses extrémités en étant monté de façon pendulaire au moyen d'une articulation (332, 334)et qui est articulé à son autre extrémité libre à une raclette d'essuyage (316) qui va et vient, entre deux positions d'inversion, perpendiculairement à son étendue longitudinale, en pouvant être appliquée sur la surface à essuyer de la glace (310), comprenant encore un bras de commande (350) qui s'étend à peu près parallèlement au bras de l'essuie-glace entraîné, dont une extrémité est montée de façon à pouvoir osciller comme un pendule, et dont l'autre extrémité est reliée de façon articulée à la raclette d'essuyage (316, 352), de telle sorte que pendant le processus d'essuyage elle exécute un mouvement pendulaire qui correspond au mouvement pendulaire du bras de l'essuie-glace, la section terminale du bras de l'essuie-glace (318) qui présente l'articulation pendulaire (332, 334), formant un organe de transmission (336) d'une première transmission (338) à plusieurs articulations, sur laquelle sont articulés d'autres organes de transmission (324, 332), à une certaine distance les uns des autres, montés de façon à pouvoir osciller sur des points d'appui (328, 330) à poste fixe et l'un (332) des autres organes de transmission (324 ou 332) formant en même temps un organe de transmission d'une deuxième transmission (340) à plusieurs articulations, à laquelle est articulée le bras de commande (350) (selon la demande de brevet 195 46 862.7),
caractérisé en ce que
• l'un des deux organes de transmission (322 ou 324) de forme allongée, à poste fixe, articulé sur la section terminale (336) du bras de l'essuie-glace (318), de la première transmission (338) à plusieurs articulations, est divisé sur le parcours de son étendue longitudinale et
• les deux organes de transmission (370, 372) sont reliés l'un à l'autre de façon articulée.

2. Dispositif d'essuie-glace selon la revendication 1,
caractérisé en ce que
l'organe de transmission (324) qui est articulé sur le bras de l'essuie-glace (318, 336) à une certaine distance de l'organe de transmission (332) qui fait partie des deux transmissions (338, 340) à plusieurs articulations, est divisé dans son étendue longitudinale.

3. Dispositif d'essuie-glace selon la revendication 2,
caractérisé en ce que
la force d'entraînement qui est exercée par un sous-ensemble d'entraînement (356) sur la première transmission (338) à plusieurs articulations, sollicite de la même manière ses deux organes de transmission (324, 332), montés à poste fixe.

4. Dispositif d'essuie-glace selon la revendication 3,
caractérisé en ce que
les deux organes de transmission (332, 370) qui sont montés à poste fixe, de la première transmission (338) à plusieurs articulations sont chacun constitués sous la forme d'un levier à deux bras dont les uns forment les organes de transmission de la première transmission à plusieurs articulations et dont les autres (376, 384) sont reliés les uns aux autres de façon articulée au moyen d'un autre organe de transmission (380) qui est articulé sur ceux-ci.
